# EUROPÄISCHE PATENTSCHRIFT

(11) **EP 2 707 173 B1**
(45) Veröffentlichungstag und Bekanntmachung des Hinweises auf die Patenterteilung: **17.09.2014**
(21) Anmeldenummer: 12718267.3
(22) Anmeldetag: 07.05.2012
(51) Int. Cl.: B23K 26/20, B23K 26/30, B23K 31/00, B23K 26/32

(54) **VERFAHREN UND VORRICHTUNG ZUM MECHANISCHEN ENTSCHICHTEN BESCHICHTETER PLATINEN UNTER VERWENDUNG EINER PRESSE UND EINEM SCHABEMESSER**
METHOD AND DEVICE FOR MECHANICALLY REMOVING COATINGS FROM COATED BLANKS USING A PRESS AND A SCRAPING KNIFE
PROCÉDÉ ET DISPOSITIF D'ENLÈVEMENT MÉCANIQUE DU REVÊTEMENT DE PLATINES DOTÉES D'UN REVÊTMENT, À L'AIDE D'UNE PRESSE ET D'UN RACLOIR

(30) Priorität: 12.05.2011 DE 102011050316
(43) Veröffentlichungstag der Anmeldung: 19.03.2014
(73) Patentinhaber: ThyssenKrupp Steel Europe AG, 47166 Duisburg (DE)
(72) Erfinder: FLEHMIG, Thomas, 40885 Ratingen (DE); GORSCHLÜTER, Jörg, 59075 Hamm (DE); WISCHMANN, Stefan, 10437 Berlin (DE)
(74) Vertreter: Cohausz & Florack
(86) Internationale Anmeldenummer: PCT/EP2012/058358
(87) Internationale Veröffentlichungsnummer: WO 2012/152749

(56) Entgegenhaltungen:
- DE-A1- 10 247 129
- DE-U1-202007 018 832
- JP-A- 2000 198 029
- DATABASE WPI Week 200846 Thomson Scientific, London, GB; AN 2008-H13550 XP002680726, -& BR PI0 505 118 A (GERDAU ACOMINAS SA) 3. Juli 2007 (2007-07-03)

## Beschreibung

Die Erfindung betrifft ein Verfahren zum zumindest teilweisen Entschichten von ein- oder beidseitig beschichteten Platinen aus Metall in Bereichen, welche eine Haupterstreckungsrichtung aufweisen, wobei die zu entschichtenden Bereiche in Haupterstreckungsrichtung sowohl geradlinig als auch gekrümmt verlaufen können. Darüber hinaus betrifft die Erfindung eine Vorrichtung zum zumindest teilweisen Entschichten einer beschichteten Platine zur Durchführung des erfindungsgemäßen Verfahrens (siehe für beide unabhängige Ansprüche BRP1/0505118).

Im zunehmenden Maße werden höherfeste und höchstfeste Stähle beispielsweise im Kraftfahrzeugbereich verwendet, da diese mit geringeren Wanddicken versehen werden können, so dass sich Gewichtsvorteile ergeben. Zur Umformung dieser Werkstoffe eignet sich insbesondere die Warmumformung, welche aber zusätzliche Beschichtungen der Platine benötigt, damit diese nicht im Warmumformwerkzeug verzundert. Häufig wird eine AlSi-Beschichtung eingesetzt. Dieses verhindert effektiv die Verzunderung der Platine während der Warmumformung, bei welcher die Platine mindestens auf Austenitisierungstemperatur aufgeheizt wird. Problematisch beim Schweißen derart beschichteter Platinen ist, dass Beschichtungsbestandteile, insbesondere Aluminium, in den Schweißnahtbereich eindringen und bei einer Warmumformung mit anschließendem Presshärten zu einer mangelhaften Festigkeit der Schweißverbindung führen. Die für die Entschichtung der Platinen notwendigen Bereiche weisen eine Haupterstreckungsrichtung, nämlich in Richtung der

Schweißnaht auf. Vorzugsweise wird die Breite der Bereiche auf maximal 5 mm beschränkt, da anderenfalls das Fehlen der Beschichtung in diesen Bereichen sich wiederum negativ auswirken würde.

Es gibt nun verschiedene Möglichkeiten eine Beschichtung, insbesondere eine AlSi-Beschichtung, aber auch jede andere Beschichtung im Bereich der Schweißnaht von der Platine vor dem Verschweißen zu entfernen. Unterschieden werden können diese in thermische, chemische und mechanische Verfahren.

So ist beispielsweise bekannt durch ein Abätzen mit Säure die Beschichtung in den gewünschten Bereichen zu entfernen. Dies ist jedoch sehr aufwendig, da die übrigen Bereiche der Platine, welche die Beschichtung weiterhin aufweisen sollen, aufwendig abgeklebt oder abgedeckt werden müssen.

Bei den mechanischen Verfahren wurden bisher Längshobeln oder das Abfräsen der Beschichtung erprobt. Beide Verfahren sind allerdings auch sehr aufwendig und kostenintensiv, da die für die Schweißnähte vorgesehenen Bereiche der Platine einzeln abgefahren werden müssen. Mit anderen Worten die Bereiche müssen entlang ihrer Haupterstreckungsrichtung abgeschabt bzw. gefräst werden.

Ferner wurden Untersuchungen durchgeführt, die betroffenen Stellen mittels Sandstrahlen zu bearbeiten. Nachteilig wurde festgestellt, dass Teile der Beschichtung, insbesondere Aluminium in das Substrat eingedrückt wurden.

Ein weiteres Verfahren ist im Stand der Technik beschrieben, bei welchem die Beschichtung mittels hochfrequenter elektromagnetischer Felder zu entfernen (DE 10 2008 006 624 A1), das sich bisher nicht etabliert hat.

Durchgesetzt hat sich bisher das Verdampfen der Beschichtungen in diesen Bereichen unter Verwendung eines gepulsten Lasers. Aus dem deutschen Gebrauchsmuster DE 20 2007 018 832 U1 ist beispielsweise bekannt, die Beschichtung nicht vollständig zu entfernen, sondern eine Zwischenschicht, die sogenannte intermetallische Zwischenschicht auf dem Substrat zu belassen, die zumindest zeitlich begrenzt den entschichteten Bereich vor Korrosion schützt. Diese intermetallische Zwischenschicht enthält weiterhin Beschichtungsbestandteile, beispielsweise Aluminium. Die Restanteile der Beschichtung, beispielsweise an Aluminium können dann in die Schweißnaht gelangen. Darüber hinaus ist auch das Abtragen der Beschichtung unter Verwendung eines Lasers relativ zeitintensiv, da auch hier der gesamte Bereich entlang seiner Haupterstreckungsrichtung entschichtet werden muss.

Aus dem deutschen Gebrauchsmuster DE 20 2007 018 832 U1 ist zusätzlich ein mechanisches Verfahren zur Entfernung der Beschichtung im Bereich von Schweißnähten bekannt, bei welchem die Beschichtung durch Verwendung von Bürsten mechanisch entfernt wird. Auch hier besteht der Nachteil darin, dass die gesamte Schweißnaht mit den Bürsten abgefahren werden muss, um diese auf der gesamten Länge zu entschichten. Zudem kann durch die Verwendung der Bürsten nicht sichergestellt werden, dass die Beschichtung vollständig entfernt wird. Alle bisher genannten Verfahren zur Entfernung der Beschichtung sind sehr aufwendig und verursachen damit relativ hohe Kosten.

Hiervon ausgehend hat sich die vorliegende Erfindung die Aufgabe gestellt, ein moglichst einfaches Verfahren und eine moglichst einfache Vorrichtung zur Verfugung zu stellen, mit welcher die Beschichtung einer Platine in moglichst einem Arbeitsgang effektiv und kostensparend entfernt werden kann.

Gemäß einer ersten Lehre der vorliegenden Erfindung wird die oben aufgezeigte Aufgabe für ein Verfahren dadurch gelöst, dass die Platine auf eine Platinenauflage einer Presse aufgelegt wird und wahrend der Schließbewegung der Presse mindestens ein Schabemesser die Beschichtung der Platine durch Schaben im Wesentlichen senkrecht zur Haupterstreckungsrichtung des zu entschichtenden Bereichs der Platine, vorzugsweise vollstandig entfernt, siehe Anspruch 1.

Im Gegensatz zu den bisher bekannten mechanischen Verfahren erfolgt die Entfernung der Beschichtung der Platine nicht in Längsrichtung des zu entschichtenden Bereichs, sondern vielmehr im Wesentlichen senkrecht zu dessen Haupterstreckungsrichtung unter Verwendung einer Presse. Pressen sind in der Regel häufig verwendete Vorrichtungen zur Bearbeitung von Platinen, so dass bereits bestehende Vorrichtungen für das erfindungsgemäße Verfahren verwendet werden können. Die Entschichtung erfolgt in der Presse in ähnlicher Art wie bei einem Umformvorgang durch einen Arbeitshub der Presse. Hierdurch werden geringe Taktzeiten realisiert, so dass sich bei Entschichtung beispielsweise von beidseitig beschichteten Platinen erhebliche Zeitvorteile erzielt werden. Dadurch, dass die zu entschichtenden Bereiche im Wesentlichen senkrecht zu deren Haupterstreckung entschichtet werden, benotigt das Schabemesser lediglich kurze Wege, beispielsweise bis zu 5 mm, welche in sehr kurzer Zeit durchlaufen werden können. Lokal können die Abmessungen der zu entschichtenden Bereiche abhängig vom Anwendungsfall auch größer sein. Zudem ist eine intermetallische Phase nicht vorhanden, so dass besonders gute Schweißergebnisse erzielt werden.

Vorzugsweise wird das erfindungsgemäße Verfahren dadurch weiter ausgestaltet, dass die Entschichtung zur Bereitstellung eines Schweißbereiches, insbesondere eines Schweißnahtbereichs erfolgt. Vorzugsweise werden beim Entschichten Dicken von mehr als 0,04 mm abgetragen, so dass die Schabemesser besonders prozesssicher eingesetzt werden können.

Gemäß einer weiteren Ausgestaltung des erfindungsgemäßen Verfahrens wird die Platine an den Kantenbereichen entschichtet. Hierdurch können auf einfache Weise Kantenbereiche der Platine zur Verfügung gestellt werden, welche zur Verbindung mit anderen Platinen, beispielsweise zur Bereitstellung eines "Tailored Blanks", benötigt werden. Bevorzugt werden alle Kantenbereiche der Platine unter Anwendung des erfindungsgemäßen Verfahrens entschichtet, so dass die Platine an allen Kantenbereichen mit einer weiteren Platine über eine Schweißnaht verbunden werden kann.

Es können selbstverständlich auch Bereiche der Platine zumindest teilweise entschichtet werden, die zumindest teilweise nicht in Kantenbereichen lokalisiert sind. Hierdurch wird erreicht, dass diese Bereiche mittels Schweißen mit anderen Blechen verbunden werden können, so dass lokale Verstärkungen angeordnet und sogenannte "Patchwork-Blanks" zur Verfügung gestellt werden können. Darüber hinaus können die zumindest teilweise entschichteten Bereiche, die beispielsweise innerhalb einer Platine lokalisiert sind, auch zur Anbindung von anderen Bauteilen vor und/oder nach dem Umformen, beispielsweise im Karosseriebau, verwendet werden.

Gemäß einer nächsten Ausgestaltung des erfindungsgemäßen Verfahrens erfolgt die Entschichtung beidseitig in einem Arbeitsschritt. Hierzu sind eine Mehrzahl an Schabemessern beidseitig der Platinen vorgesehen, welche über die Schließbewegung der Presse ein Schaben des zu entschichtenden Bereichs im Wesentlichen senkrecht zu dessen Haupterstreckungsrichtung durchführen. Hierdurch wird die Entschichtung von beidseitig beschichteten Platinen wesentlich erleichtert. Vorteilhaft kann die beidseitige Entschichtung dadurch ausgestaltete werden, dass diese auf beiden Seiten der Platine gleichzeitig stattfindet.

Wird eine Platine, welche für die Warmumformung vorgesehen ist, zumindest teilweise entschichtet, kann diese mit weiteren Platinen und/oder Teilen verschweißt werden, ohne dass die Schweißnaht in der nachfolgenden Warmumformung zu Festigkeitsproblemen neigt.

Gemäß einer nächsten Ausgestaltung des erfindungsgemäßen Verfahrens erfolgt nach dem zumindest teilweisen Entschichten der Platine ein Zuschnitt, welcher optional in der Presse im gleichen Arbeitsschritt durchgeführt wird. Die Platinen, welche nach dem Entschichten entschichtete Bereiche aufweisen, können an diesen beschnitten werden, so dass wiederum Kantenbereiche zur Verfügung gestellt werden können, die ideal zum Verschweißen geeignet sind. Der Zuschnitt der Platine lässt sich allerdings auch in der gleichen Presse durchführen und zwar bevorzugt im gleichen Arbeitsschritt. Dies vereinfacht die Herstellung von Platinen, die für das Verschweißen geeignet sind, erheblich.

Gemäß einer weiteren Ausgestaltung des erfindungsgemäßen Verfahrens werden zum Entschichten die Schabemesser aktiv angetrieben oder zwangsgeführt. Ein aktives Antreiben der Schabemesser, beispielsweise durch hydraulische- oder servoelektrische Mittel erlaubt eine maximale Flexibilität hinsichtlich des Zeitpunkts der Durchführung des Entschichtens. Auf besonderes einfache Art und Weise erfolgt jedoch die Entschichtung durch zwangsgeführte Schabemesser, welche Bewegungen der Presse ausnutzen, um die Schabemesser, beispielsweise über einen Formschluss angetrieben, bewegen, um die Platine in den gewünschten Bereichen zu entschichten. Entsprechende Zwangsführungsmittel sind besonders einfach aufgebaut und besonders prozesssicher.

Vorzugsweise weisen gemäß einer nächsten Ausgestaltung des erfindungsgemäßen Verfahrens die zu entschichtenden Bereiche der Platine, insbesondere einer im Kantenstoß mit anderen Platinen zu verschweißende Platine, eine Breite von 0,2 mm bis 5 mm, vorzugsweise eine Breite 0,8 mm bis 1,4 mm auf. Diese Breiten werden üblicherweise verwendet, um genügend entschichtetes Platinenmaterial bereitzustellen, so dass bei der Erzeugung einer Schweißnaht an diesen Bereichen, bei welchem üblicherweise das Laserstrahlschweißen verwendet wird, keine unerwünschten Beschichtungsbestandteile in der Schweißnaht verbleiben.

Gemäß einer zweiten Lehre der vorliegenden Erfindung wird die oben aufgezeigte Aufgabe für eine Vorrichtung zur Durchführung des erfindungsgemäßen Verfahrens dadurch gelöst, dass diese eine Presse mit einem Oberwerkzeug, einem Unterwerkzeug, einer Platinenauflage, einem Pressentisch, mindestens einem Schabemesser und Mitteln zur Bewegung des mindestens einen Schabemessers im Wesentlichen senkrecht zur Haupterstreckungsrichtung des zu entschichtenden Bereichs der Platine zur Entschichtung dieses Bereichs umfasst, siehe Anspruch 9.

Erfindungsgemäß wird also eine Presse mit einem Oberwerkzeug und einem Unterwerkzeug zur Entschichtung der Platine mit einem Schabemesser verwendet. Die Investitionskosten können hierdurch reduziert, da die erfindungsgemäße Vorrichtung durch Nutzung bestehender Anlagen realisiert werden kann. Darüber hinaus wird durch die Bewegung des Schabemessers im Wesentlichen senkrecht zur Haupterstreckungsrichtung des zu entschichtenden Bereichs der Platine erreicht, dass eine kurze Taktzeit erzielt und damit eine wirtschaftlichere Entschichtung der Platine ermöglicht wird. Zudem kann die Bewegung der Schabemesser durch die Schließbewegung der Presse bereitgestellt werden. Die Entschichtung der Platine in den für die Schweißnähte vorgesehenen Bereichen erfolgt damit in einem einzigen Arbeitshub und insofern besonders wirtschaftlich.

Umfassen die Mittel zur Bewegung des mindestens einen Schabemessers Zwangsführungen zur Führung eines Schabemessers oder einer Mehrzahl an Schabemesser, kann mit einfachen Mitteln die Schließbewegung der Presse in eine Bewegung des Schabemessers umgesetzt werden, wobei gleichzeitig die von der Presse bereitgestellten enormen Kräfte genutzt werden können. Im Vergleich zu aktiv angetriebenen Schabemessern, beispielsweise servo-elektrisch oder hydraulisch ist eine Zwangsführung, welche üblicherweise über einen Formschluss erfolgt, besonders einfach und prozesssicher.

Gemäß einer weiteren Ausgestaltung der erfindungsgemäßen Vorrichtung sind mindestens ein Schabemesser im Oberwerkzeug und mindestens ein Schabemesser im Unterwerkzeug sowie zu jedem Schabemesser zugeordnete Schabemesserführungen vorgesehen, wobei die Schabemesserführungen des Oberwerkzeugs während des Schließvorgangs der Presse mit den Schabemesserführungen des Unterwerkzeugs in Formschluss stehen und die Schabemesserführungen des Unterwerkzeugs über Pinole der Presse, welche Schubschrägen aufweisen, zwangsgeführt werden, so dass über eine Schließbewegung der Presse die Schabemesser im Oberwerkzeug und im Unterwerkzeug senkrecht zur Schließbewegung verschiebbar sind. Hierdurch wird gewährleistet, dass ein beidseitiges Entschichten auch über zwangsgeführte Schabemesser beidseitig der Platine auf einfache Weise durchgeführt werden kann.

Weist die Presse zusätzlich mindestens einen Schneid- und/oder Stanzstempel auf, welcher die Platine zumindest teilweise an den entschichteten Bereichen beschneidet oder ausstanzt, kann ermöglicht werden, dass die Platine an ihren zu entschichtenden Bereichen in einem Arbeitshub entschichtet und gleichzeitig an diesen Bereichen beschnitten wird, so dass in einem Arbeitshub eine an den entschichteten Bereichen verschweißbare Platine bereitgestellt werden kann.

Gemäß einer weiteren Ausgestaltung der erfindungsgemäßen Vorrichtung ist im Ober- und/oder Unterwerkzeug ein zentral angeordneter Druckstempel vorgesehen, welcher die Platine während des Entschichtens auf die Platinenauflage drückt. Durch die Verwendung dieses Druckstempels wird ermöglicht, dass die Platine während des Entschichtens ortsfest verbleibt. Das Entschichten kann insofern prozesssicherer gestaltet werden.

Bilden im Ober- und/oder Unterwerkzeug vorgesehene Schabemesser und die zugehörigen Schabemesserführungen die Platinenauflage, wobei Fortsätze am Druckstempel sowie am Unterwerkzeug vorgesehen sind, welche durch die Schabemesserführungen verlaufen und direkt Kontakt mit der Platine aufweisen, wird es gemäß einer weiteren Ausgestaltung der Erfindung ermöglicht, über den Druckstempel die Platine fest gegen das Unterwerkzeug zu pressen und gleichzeitig die Bewegung der Schabemesser von der Krafteinwirkung der Presse auf die Platine zu entkoppeln. Darüber hinaus wird durch die Verwendung der Schabemesserführungen gleichzeitig als Platinenauflage erreicht, dass die Schabemesser ebenfalls als Schneidkante für den Schneid- und/oder Stanzstempel verwendet werden können, so dass dieser nach erfolgtem Schaben lediglich entlang der Schabemesser bzw. der Schabemesserführungen geführt werden muss, um die Platine zu beschneiden. Im Ergebnis kann auch ein sehr sauberer Beschnitt der Platinen im entschichteten Bereich erreicht werden.

Sind je zwei gegenüberliegend angeordnete Schabemesser auf jeder Seite der zu entschichtenden Platine angeordnet, kann auf einfache Weise eine Platine beidseitig an zwei Kantenbereichen mit anderen Worten an vier Bereichen gleichzeitig entschichtet werden. Durch diese Anordnung der Schabemesser wird die zur Entschichtung benötigte Arbeitszeit deutlich reduziert, da diese Vorrichtung eine Entschichtung an vier Bereichen gleichzeitig in einem Arbeitshub ermöglicht.

Vorstellbar ist zudem, dass zwei zu verschweißende Platinen in einem Werkzeug an den vier zu entschichtenden Seiten gleichzeitig, beispielsweise in einem Arbeitshub oder in einer Arbeitshubfolge entschichtet werden und so ein entschichtetes, verschweißbares Vorplatinenpaar entsteht, wobei vorzugsweise beide Platinen unterschiedlich dick sind.

Im Weiteren soll die Erfindung anhand von Ausführungsbeispielen in Verbindung mit der Zeichnung näher erläutert werden. In der Zeichnung zeigt
- Fig. 1: in einer schematischen Schnittansicht ein erstes Ausführungsbeispiel einer erfindungsgemäßen Vorrichtung zum zumindest teilweise Entschichten einer beschichteten Platine,
- Fig. 2: eine Detailansicht der Schabemesserführung des Ausführungsbeispiels aus Fig. 1,
- Fig. 3: eine Detailansicht des Schabemessers und der Platine des Ausführungsbeispiels aus Fig. 1,
- Fig. 4: in einer schematischen Schnittansicht das Ausführungsbeispiel aus Fig. 1 mit geschlossenem Ober- und Unterwerkzeug,
- Fig. 5: eine Detailansicht der Schabemesserführung aus Fig. 4,
- Fig. 6: die Detailansicht des Schabemessers aus Fig. 5,
- Fig. 7: in einer schematischen Schnittansicht das Ausführungsbeispiel aus Fig. 1 nach dem Entschichten der Platine,
- Fig. 8: eine Detailansicht der Schabemesserführung aus Fig. 7,
- Fig. 9: eine Detailansicht des Schabemessers und des entschichteten Bereichs der Platine aus Fig. 8,
- Fig. 10: in einer Draufsicht eine Platine und die zu entschichtenden Bereiche,
- Fig. 11: in einer schematischen Schnittänsicht ein zweites Ausführungsbeispiel einer erfindungsgemäßen Vorrichtung zum Entschichten und Beschneiden einer Platine in geöffnetem Zustand,
- Fig. 12: das Ausführungsbeispiel aus Fig. 11 mit geschlossenem Ober- und Unterwerkzeug,
- Fig. 13: in einer Detailansicht die Position der Schabemesser aus Fig. 12,
- Fig. 14: das Ausführungsbeispiel auf Fig. 11 nach dem Entschichten und vor dem Beschneiden der Platine,
- Fig. 15: eine Detailansicht der Schabemesser aus Fig. 14 im Bereich der entschichteten Platine,
- Fig. 16: das Ausführungsbeispiel aus Fig. 11 nach dem Beschneiden der Platine,
- Fig. 17: zeigt eine Detailansicht der Schneidkante sowie der Schabemesserführung des Ausführungsbeispiels aus Fig. 11 und
- Fig. 18: eine Detailansicht der entschichteten Platine unmittelbar nach dem Beschneiden der Platine im Beschnittbereich.

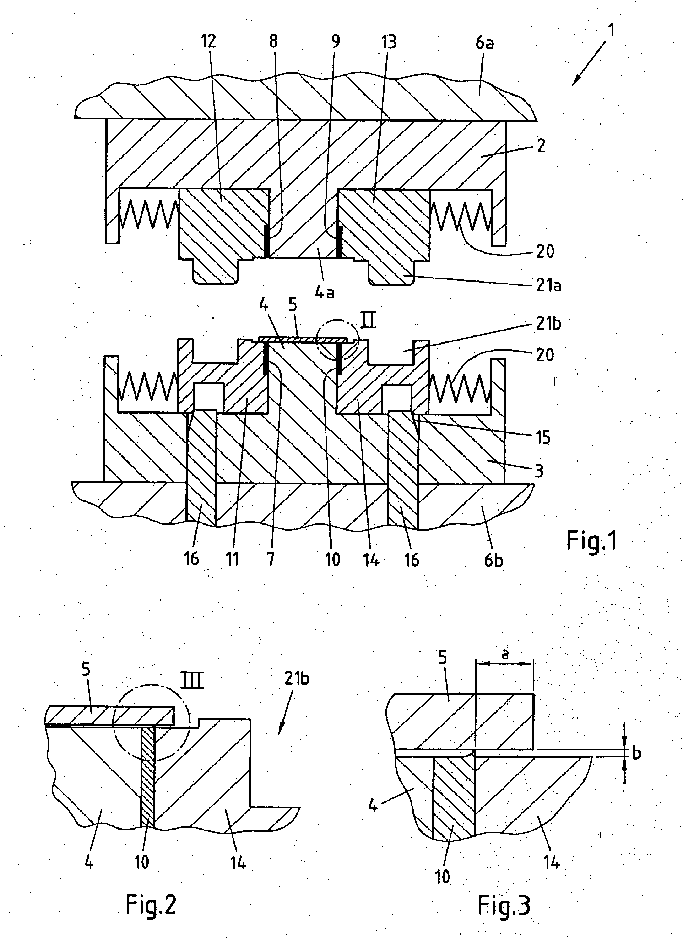

Fig. 1 zeigt ein erstes Ausführungsbeispiel einer Presse 1 zur Entschichtung einer Platine 5 mit einem Oberwerkzeug 2, einem Unterwerkzeug 3, einer Platinenauflage 4 sowie einem Pressenstempel 6a und einem Pressentisch 6b. In dem Unterwerkzeug 3 ist die Platinenauflage 4 angeordnet. Im Oberwerkzeug 2 ist gegenüberliegend zur Platinenauflage 4 ein Gegenhalter 4a zur Beaufschlagung der Platine 5 mit einer Haltekraft vorgesehen. Je zwei Schabemesserführungen 11, 14, und 12 und 13, welche die Schabemesser 7, 8, 9 und 10 führen, sind paarweise und spiegelsymmetrisch zueinander im Ober- bzw. Unterwerkzeug 2,3 angeordnet. Die Schabemesserführungen 11, 12, 13 und 14 sind über Druckfedern 20 mit einer Kraft beaufschlagt, so dass diese gegen die Platinenauflage drücken und in Schabposition gehalten werden.

In Fig. 1 sind ferner Pinole 16 der Presse 1 dargestellt, welche an ihren Enden Schubschrägen 15 aufweisen, die zur Zwangsführung der Schabemesserführungen 11, 14 verwendet werden. Damit die Schabemesserführungen 12, 13 des Oberwerkzeugs 2 ebenfalls synchron zu den Schabemesserfuhrungen 11, 14 des Unterwerkzeugs 3 zwangsgefuhrt werden, weisen diese hervorstehende Bereiche 21a auf, welche in Ausnehmungen 21b der Schabemesserführungen 11, 14 eintauchen, wenn das Ober- und Unterwerkzeug 2,3 geschlossen werden. In diesem Fall sind Schabemesserführungen 11 und 12 sowie 14 und 13 formschlüssig miteinander verbunden.

Eine Detailansicht der Schabemesserführung 14 sowie des Schabemessers 10 und der Platine 5 aus dem Ausführungsbeispiel aus Fig. 1 zeigt Fig. 2. Zu erkennen ist, dass die Platine 5 auf dem Schabemesser 10 aufliegt. Noch besser zeigt dies Fig. 3, aus welcher erkennbar ist, dass vorzugsweise gebogene Schabemesser 10 in dem dargestellten Ausfuhrungsbeispiel verwendet werden. Die Breite des zu entschichtenden Bereichs a beträgt in dem vorliegenden Ausführungsbeispiel etwa 1,2 mm. Um ein gutes Ergebnis bei der Entschichtung zu erzielen hat es sich gezeigt, dass es vorteilhaft ist, wenn das Schabemesser einen Überstand b von mindestens 0,04 mm aufweist.

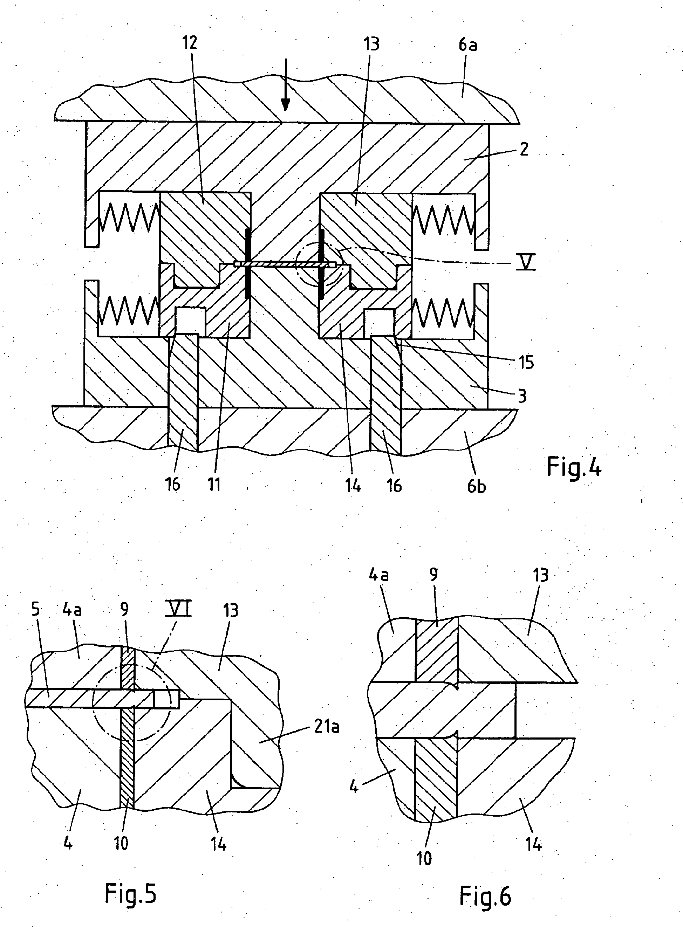

In Fig. 4 ist das Ausführungsbeispiel aus Fig. 1 schematisch in einer Schnittansicht zu dem Zeitpunkt dargestellt, zu welchem das Oberwerkzeug 2 in das Unterwerkzeug 3 eingefahren ist. Die Schabemesserführungen 12, 13 sind dann einen Formschluss mit den Schabemesserführungen 11 und 14 gekoppelt. Über die Druckfedern 20 werden die Schabemesserführungen 11, 12, 13, 14 und damit auch die Schabemesser 7, 8 ,9 ,10 in Position gehalten, so dass noch keine seitliche Bewegung der Schabemesser 7, 8, 9, 10 erfolgt. Durch den Druck des Pressenstempels 6a hat sich die Platinenauflage 4 gegen die Platine 5 gepresst und die Schabemesser tauchen mit ihren Schneidkanten in die Beschichtung der zu entschichtenden Platine ein. Die Position der Schabemesser 9, 10 bei geschlossenem Ober- und Unterwerkzeug 2, 3 zeigt Fig. 5. In dem dargestellten Ausführungsbeispiel kann ein beidseitiges Entschichten durchgeführt werden, da sowohl auf der Oberseite als auch der Unterseite der Platine 5 die Schabemesser 9, 10 angreifen. Noch anschaulicher zeigt dies Fig. 6, welche den Bereich des Eingriffs der Schabemesser 9, 10 in die zu entschichtende Platine 5 zeigt. Bei geschlossenem Ober- und Unterwerkzeug 2, 3 tauchen die Schabemesser 9, 10 in die Platine 5, insbesondere in deren Beschichtung ein.

Jetzt werden die Pinole 16 der Presse ausgefahren oder der Pressentisch 6b relativ zu den Pinolen abgesenkt. Die Folge ist, dass die Pinole 16 über ihre Schubschrägen 15 die Schabemesserführungen 11, 14 des Unterwerkzeugs zwangsgeführt nach außen verdrängten und die Schabemesser 7, 10 den zu entschichtenden Bereich der Platine quer zu dessen Haupterstreckungsrichtung entschichten. Aufgrund des Formschlusses zwischen den Schabemesserführungen 11, 14 des Unterwerkzeugs 3 und der Schabemesserführungen 12, 13 des Oberwerkzeugs 2 erfolgt eine identische Bewegung der Schabemesserführungen 12, 13 und damit der Schabemesser 8, 9. Auch diese Schabemesser werden durch die Zwangsführung nach außen verdrängt und es erfolgt ein Entschichten der Platine durch eine Bewegung eines Schabemessers 8, 9 im Wesentlichen senkrecht zur Haupterstreckungsrichtung des zu entschichtenden Bereichs.

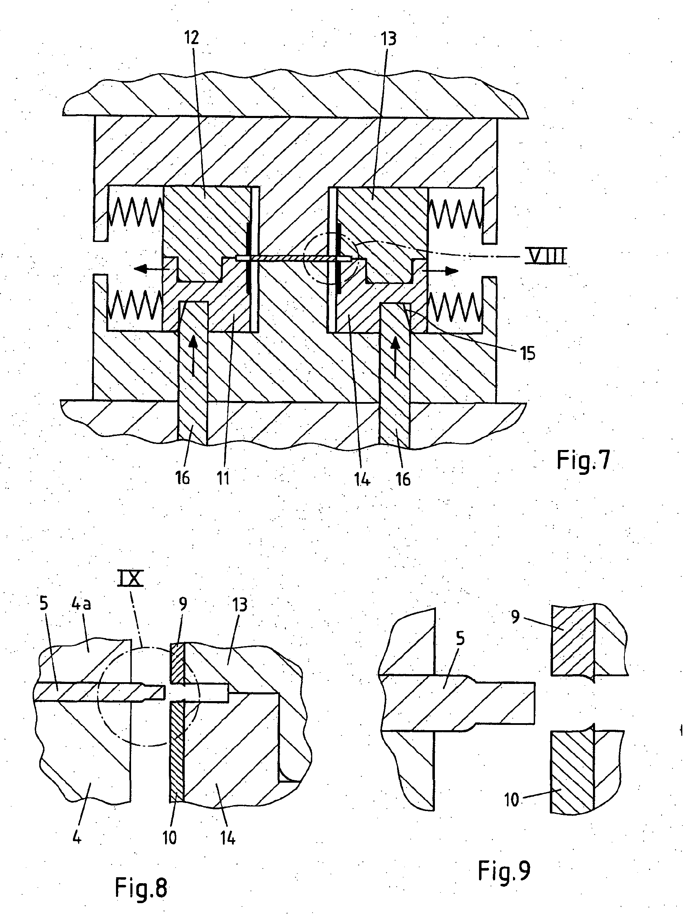

In der Fig. 7 ist der Entschichtungsprozess bereits abgeschlossen, da die Pinole vollständig in einer Ausnehmung der Schabemesserfuhrungen 11, 14 eingetaucht sind und die Schubschrägen 15 durch die Schabemesserfuhrungen 11, 14 vollstandig abgefahren wurden.

Die Position der Schabemesser 9, 10 nach Abschluss der Entschichtung gemäß Fig. 7 zeigt die Fig. 8 in einer Detailansicht. Zu erkennen ist, dass die Schabemesser 9, 10 die Platine bereits freigegeben haben. Fig. 9 zeigt eine Detailansicht des entschichteten Bereichs der Platine 5. Die Platine 5 ist in diesem Bereich beidseitig entschichtet.

Es ist aber auch denkbar, die Schabemesser lediglich auf einer Seite der Platine anzuwenden. Üblicherweise werden die Platinen allerdings an ihren Kanten verschweißt, so dass häufig eine beidseitige Entschichtung der Kanten benötigt wird.

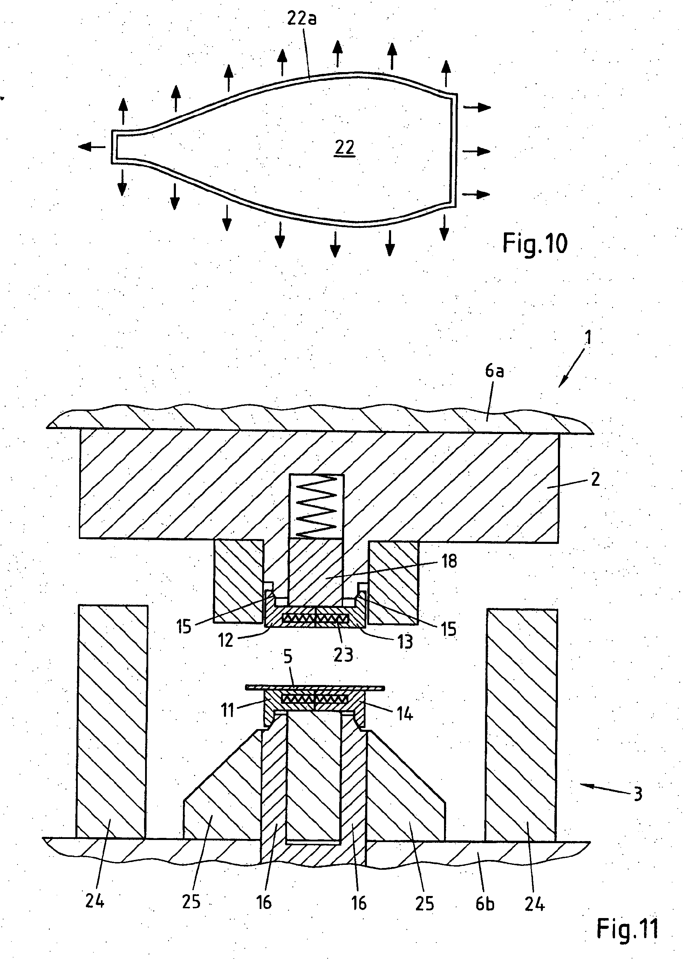

Fig. 10 zeigt eine Platine 22 in einer Draufsicht. Die Platine weist einen zu entschichtenden, umlaufenden Bereich 22a auf, welcher mit erfindungsgemäßen Vorrichtungen entschichtet worden ist. Die Pfeilrichtungen zeigen dabei die Bewegungsrichtung der Schabemesser an, welche zur Entschichtung der Platine 22 verwendet wurden. Es ist leicht vorstellbar, dass bei einer so kurzen Bewegung von wenigen Millimetern der Schabevorgang bzw. der Entschichtungsvorgang entsprechend schnell ablauft und so zu sehr geringen Taktzeiten führen kann.

Fig. 11 zeigt nun ein zweites Ausfuhrungsbeispiel einer Vorrichtung zum Entschichten einer Platine, welche eine Presse 1 umfasst, die einen Pressenstempel 6a und einen Pressentisch 6b aufweist. Die Schabemesserfuhrungen 11, 12, 13, 14 des Ausführungsbeispiels aus Fig. 11 bilden jetzt gleichzeitig die Platinenauflage und sind jeweils paarweise über Zugfedern auf Entschichtungsposition bzw. Anfangsposition gehalten. Darüber hinaus weist das Ausführungsbeispiel aus Fig. 11 einen Endlagenblock 24 sowie eine Schrottrutsche 25 auf. Die Schrottrutsche 25 dient dazu, die beim Beschneiden der Platine 5 anfallenden Schneidreste kontrolliert abzufuhren. Der Endlagenblock 24 begrenzt den Weg des Pressenstempels 6a.

Im Unterwerkzeug 3 des zweiten Ausführungsbeispiels sind darüber hinaus Pinole 16 vorgesehen, welche Schubschrägen bzw. Schubkeile 15 aufweisen, über welche die Schabemesserführungen 11, 14 zwangsgeführt werden. Im Unterschied zum Ausfuhrungsbeispiel aus Fig. 1 weist das zweite Ausfuhrungsbeispiel der erfindungsgemäßen Vorrichtung ebenfalls Schubschrägen bzw. Schubkeile 15 im Oberwerkzeug 2 auf. Darüber hinaus ist ein Druckstempel 18 vorgesehen, welcher über durch die Schabemesserführungen 12, 13 führende Fortsätze 19, welche in Fig. 11 nicht dargestellt sind, unmittelbar Kontakt mit der Platine hat. Identisch zu diesen Fortsatzen 19 des Oberwerkzeugs 2 sind auch im Unterwerkzeug 3 Fortsätze 19 vorgesehen, welche den von dem Oberwerkzeug 2 auf die Platine aufgebrachten Druck des Druckstempels 18 auf das Unterwerkzeug 3 ubertragen. Auch die Fortsatze 19 des Unterwerkzeugs 3 sind in Fig. 11 nicht dargestellt.

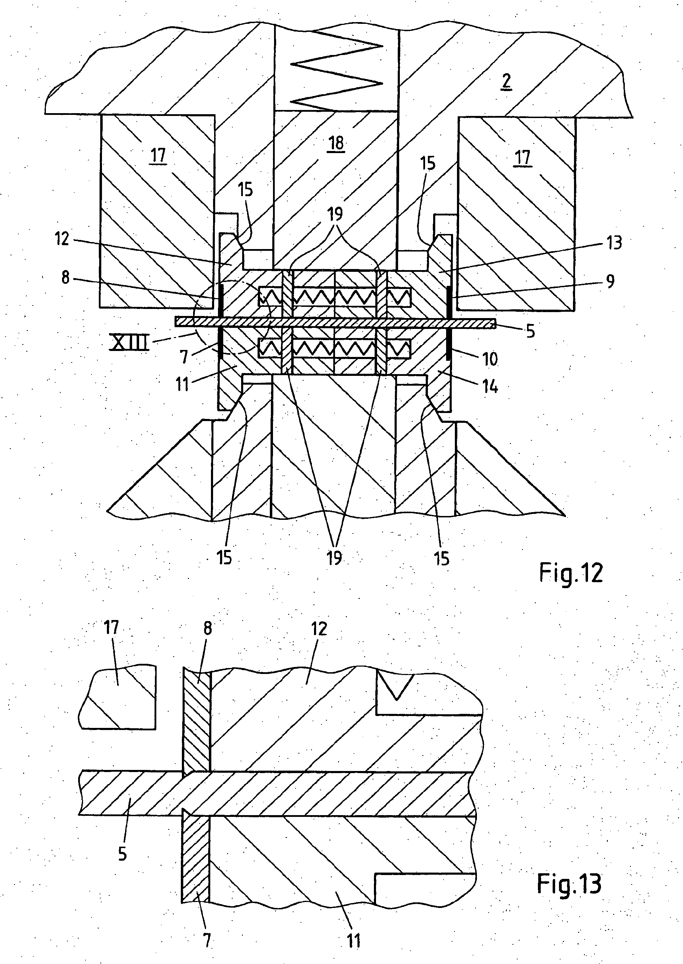

In Fig. 12 ist das zweite Atrsfuhrungsbeispiel zu dem Zeitpunkt dargestellt, zu welchem Ober- und Unterwerkzeug 2,3 geschlossen sind und die Schabemesser 7, 8, 9, 10 in die Platine 5 eingreifen. In dieser Position halten die Zugfedern 23 die Schabemesserführungen 11, 12, 13, 14 noch zusammen auf Anfangsposition. Der Druckstempel 18 überträgt über die Fortsätze 19 eine Kraft auf die Platine 5, welche in die Fortsätze 19 des Unterwerkzeugs 3 weitergeleitet werden. Hierdurch wird erreicht, dass die Schabemesserfuhrungen 11, 12, 13, 14 nicht mit voller Last auf der Platine 5 aufliegen und einfacher seitlich bewegt werden können. Deutlich sind in Fig. 12 die Schubschragen 15 zu erkennen, welche sowohl im Unterwerkzeug als auch im Oberwerkzeug angeordnet sind. Die Schneidstempel 17 stehen in diesem Moment noch in Anfangsposition und stehen nicht im Eingriff mit der Platine 5.

Fig. 13 zeigt eine Detailansicht der Schabemesserfuhrungen 11, 12 inklusive deren Schabemesser 7,8. Bei geschlossenem Ober- und Unterwerkzeug 2, 3 tauchen die Schabemesser 7, 8 in die Beschichtung der Platine 5 ein.

Fahrt der Pressenstempel 6a weiter zu, werden die Schabemesserführungen 11, 12, 13, 14 über die Schubschrägen 15 bzw. Schubkeile 15 gegen die Zugkraft der Federn 23 nach außen verdrängt und führen den Schabeprozess durch. Die Schabemesser entschichten die Platine 5 in einem Bereich, der eine Haupterstreckung aufweist. Die Bewegung der Schabemesser verlauft im Wesentlichen senkrecht zur Haupterstreckungsrichtung des zu entschichtenden Bereichs der Platine 5.

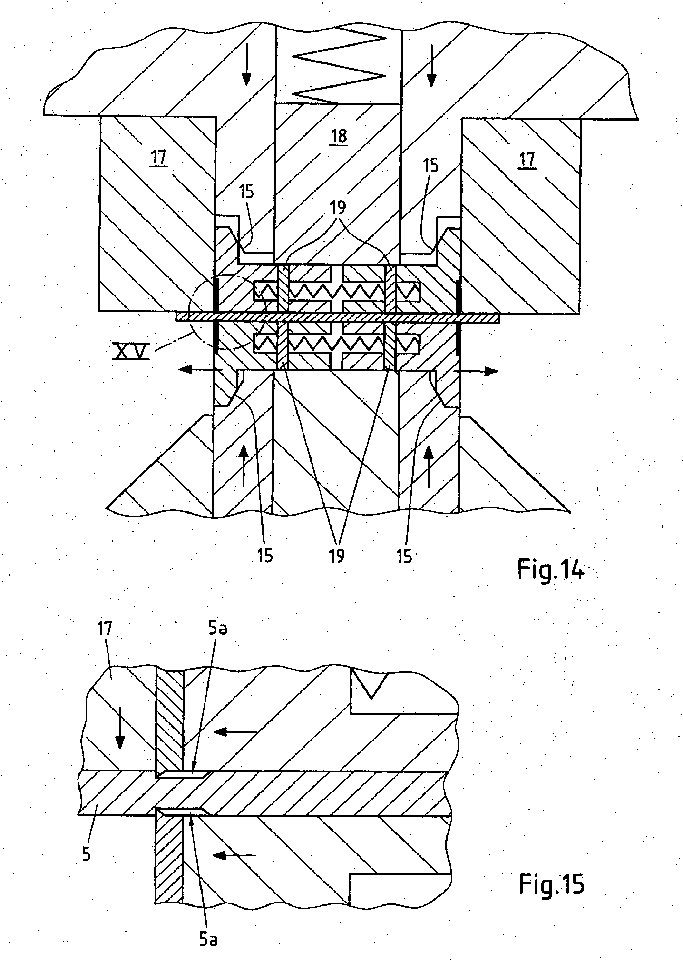

Der Schneidstempel 17 gelangt nach Abschluss des Entschichtens in Schneidposition, Fig. 14. Den Beginn des Schneidvorgangs zeigt anschaulich Fig. 15, welche eine

Detailansicht der Platine 5 in einem entschichteten Bereich aus Fig. 14 darstellt. Nach Abschluss des Entschichtungsvorgangs weist die Platine entschichtete Bereiche 5a auf. Die Schubschrägen wurden von den Schabemesserführungen 11, 12, 13, 14 durchlaufen, so dass bei weiterem Absenken des Pressenstempels 6a es zu keiner weiteren seitlichen Bewegung der Schabemesserführungen 11, 12, 13, 14 kommt. Lediglich der Schneidstempel 17 wird nach unten bewegt, so dass die Schabemesser gleichzeitig als Schneidkante für den Schneid- bzw. Stanzstempel 17 dienen.

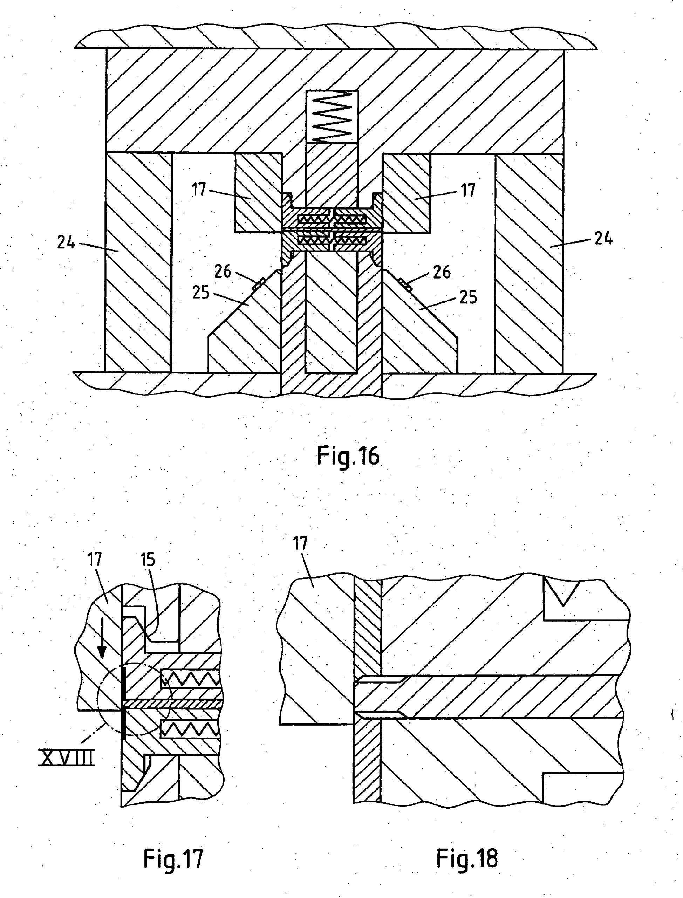

Die auf Endlage gefahrene Presse zeigt Fig. 16. Der Schneidstempel 17 hat die Platine 5 nunmehr beidseitig beschnitten und die Schneidreste 26 gelangen über die Schrottrutsche 25 kontrolliert aus dem Arbeitsbereich. Eine Detailansicht des geschnittenen Bereichs zeigt Fig. 17. Die Schubschrägen 15 spielen, wie zu erkennen ist, bei der weiteren Fortbewegung des Schneidstempels 17 keine Rolle mehr. Mit der erfindungsgemäßen Vorrichtung bzw. mit dem erfindungsgemäßen Verfahren kann insofern auf einfache Art und Weise eine an ihren Kanten in einem Arbeitsschritt entschichtete und beschnittene Platine zur Verfügung gestellt werden. Zur Entschichtung bieten sich die zuvor genannten AlSi-Beschichtungen an. Es ist aber auch denkbar andere Beschichtungen von einer Platine zu entfernen.

## Patentansprüche

1. Verfahren zum zumindest teilweisen Entschichten von ein- oder beidseitig beschichteten Platinen aus Metall in Bereichen, welche eine Haupterstreckungsrichtung aufweisen, wobei die zu entschichtenden Bereiche in Haupterstreckungsrichtung sowohl geradlinig als auch gekrümmt verlaufen können,
**dadurch gekennzeichnet, dass** die Platine auf eine Platinenauflage einer Presse aufgelegt wird und während der Schließbewegung der Presse mindestens ein Schabemesser die Beschichtung der Platine durch Schaben im Wesentlichen senkrecht zur Haupterstreckungsrichtung des zu entschichtenden Bereichs der Platine entfernt.

2. Verfahren nach Anspruch 1,
**dadurch gekennzeichnet, dass** die Entschichtung zur Bereitstellung eines Schweißbereichs, insbesondere eines Schweißnahtbereichs erfolgt.

3. Verfahren nach Anspruch 1 oder 2,
**dadurch gekennzeichnet, dass** die Platine an den Kantenbereichen entschichtet wird.

4. Verfahren nach einem der Ansprüche 1 bis 3,
**dadurch gekennzeichnet, dass** die Entschichtung beidseitig in einem Arbeitsschritt erfolgt.

5. Verfahren nach einem der Ansprüche 1 bis 4,
**dadurch gekennzeichnet, dass** eine Platine, welche für die Warmumformung vorgesehen ist, zumindest teilweise entschichtet wird.

6. Verfahren nach einem der Ansprüche 1 bis 5
**dadurch gekennzeichnet, dass** nach dem zumindest teilweise Entschichten der Platine ein Zuschnitt erfolgt, welcher optional in der Presse im gleichen Arbeitsschritt durchgeführt wird.

7. Verfahren nach einem der Ansprüche 1 bis 6,
**dadurch gekennzeichnet, dass** zum Entschichten die Schabemesser aktiv angetrieben oder zwangsgeführt werden,

8. Verfahren nach einem der Ansprüche 1 bis 7,
**dadurch gekennzeichnet, dass** die zu entschichtenden Bereiche der Platine eine Breite von 0,2 mm bis 5 mm, vorzugsweise eine Breite 0,8 mm bis 1,4 mm aufweisen.

9. Vorrichtung zum zumindest teilweise Entschichten einer beschichteten Platine mit einem Verfahren gemäß einem der Ansprüche 1 bis 8, **gekennzeichnet durch** eine Presse mit einem Oberwerkzeug, einem Unterwerkzeug, einer Platinenauflage, einem Pressentisch, mindestens einem Schabemesser und Mitteln zur Bewegung des mindestens einen Schabemessers im Wesentlichen senkrecht zur Haupterstreckungsrichtung des zu entschichtenden Bereichs der Platine zur Entschichtung dieses Bereichs.

10. Vorrichtung nach Anspruch 9,
**dadurch gekennzeichnet, dass** die Mittel zur Bewegung des mindestens einen Schabemessers Zwangsführungen zur Führung eines Schabemessers oder einer Mehrzahl an Schabemesser umfassen.

11. Vorrichtung nach Anspruch 10,
**dadurch gekennzeichnet, dass** mindestens ein Schabemesser im Oberwerkzeug und mindestens ein Schabemesser im Unterwerkzeug sowie zu jedem Schabemesser zugeordnete Schabemesserführungen vorgesehen sind, die Schabemesserführungen des Oberwerkzeugs während des Schließvorgangs der Presse mit den Schabemesserführungen des Unterwerkzeugs in Formschluss stehen und die Schabemesserführungen des Unterwerkzeugs über Pinole der Presse, welche Schubschrägen aufweisen, zwangsgeführt werden, so dass über eine Schließbewegung der Presse die Schabemesser im Oberwerkzeug und im Unterwerkzeug senkrecht zur Schließbewegung verschiebbar sind.

12. Vorrichtung nach einem der Ansprüche 9 bis 11,
**dadurch gekennzeichnet, dass** die Presse zusätzlich mindestens einen Schneid- und/oder Stanzstempel aufweist, welcher die Platine zumindest teilweise an den entschichteten Bereichen beschneidet oder ausstanzt.

13. Vorrichtung nach einem der Ansprüche 9 bis 12,
**dadurch gekennzeichnet, dass** im Ober- und/oder Unterwerkzeug ein zentral angeordneter Druckstempel vorgesehen ist, welcher die Platine während des Entschichtens auf die Platinenauflage drückt.

14. Vorrichtung nach einem der Ansprüche 9 bis 13,
**dadurch gekennzeichnet, dass** im Ober- und/oder Unterwerkzeug vorgesehene Schabemesser und die zugehörigen Schabemesserführungen die Platinenauflage bilden, wobei Fortsätze am Druckstempel und am Unterwerkzeug vorgesehen sind, welche durch die Schabemesserführungen verlaufen und direkt Kontakt mit der Platine aufweisen.

15. Vorrichtung nach einem der Ansprüche 9 bis 14,
**dadurch gekennzeichnet, dass** je zwei gegenüberliegend angeordnete Schabemesser auf jeder Seite der zu entschichtenden Platine angeordnet sind.

## Claims

1. Method for the decoating at least in part of blanks made of metal which are coated on one or both sides in regions, which have a main extension direction, wherein the regions to be decoated can extend in both a straight or curved manner in the main extension direction, **characterised in that** the blank is placed on a blank support of a press and **in that** during the closing movement of the press at least one scraping knife removes the coating on the blank by scraping substantially perpendicular to the main extension direction of the region of the blank to be decoated.

2. Method according to Claim 1, **characterised in that** the decoating is carried out to provide a welded region, in particular a welded seam region.

3. Method according to either Claim 1 or Claim 2, **characterised in that** the blank is decoated on the edge regions.

4. Method according to any one of claims 1 to 3, **characterised in that** the decoating is carried out on both sides in one work step.

5. Method according to any one of claims 1 to 4, **characterised in that** a blank which is provided for hot forming is decoated at least in part.

6. Method according to any one of claims 1 to 5, **characterised in that** a cut is made following the decoating at least in part of the blank, which is optionally carried out in the same work step in the press.

7. Method according to any one of claims 1 to 6, **characterised in that** the scraping knives are actively driven or forcibly actuated to carry out the decoating process.

8. Method according to any one of claims 1 to 7, **characterised in that** the regions of the blank to be decoated have a width of 0.2 mm to 5 mm, preferably a width of 0.8 mm to 1.4 mm.

9. Device for the decoating at least in part of a coated blank using a method according to any one of claims 1 to 8, **characterised in** a press with an upper tool, a lower tool, a blank support, a pressing table, at least one scraping knife and means to move the at least one scraping knife substantially perpendicular to the main extension direction of the region of the blank to be decoated in order to decoat this region.

10. Device according to Claim 9, **characterised in that** the means to move the at least one scraping knife comprise forcible guides to guide a scraping knife or a plurality of scraping knives.

11. Device according to Claim 10, **characterised in that** at least one scraping knife in the upper tool and at least one scraping knife in the lower tool and scraping knife guides allocated to each scraping knife are provided, the scraping knife guides of the upper tool are form locked to the scraping knife guides of the lower tool during the welding process of the press and the scraping knife guides of the lower tool are forcibly actuated by means of sleeves of the press which have thrust chamfers such that by means of a closing movement of the press the scraping knives in the upper tool and in the lower tool can be displaced perpendicular to the closing movement.

12. Device according to any one of claims 9 to 11, **characterised in that** the press additionally has at least one cutting and/or punching stamp which cuts or punches the blank at least in part at the decoated regions.

13. Device according to any one of claims 9 to 12, **characterised in that** a centrally-arranged compression stamp is provided in the upper and/or lower tool, which compression stamp compresses the blank onto the blank support during decoating.

14. Device according to any one of claims 9 to 13, **characterised in that** scraping knives provided in the upper and/or lower tool and the associated scraping knife guides form the blank support, wherein extensions are provided on the compression stamp and on the lower tool which extend through the scraping knife guides and have direct contact with the blank.

15. Device according to any one of claims 9 to 14, **characterised in that** two opposing scraping knives are arranged on each side of the blank to be decoated.

## Revendications

1. Procédé d'enlèvement au moins partiel du revêtement de platines en métal revêtues d'un côté ou des deux côtés dans des zones présentant une direction d'extension principale, les zones dont le revêtement doit être enlevé pouvant présenter dans la direction d'extension principale aussi bien un profil linéaire que rectiligne courbe,
**caractérisé en ce que**
la platine est posée sur un support de platine d'une presse et pendant le mouvement de fermeture de la presse au moins un racloir enlève le revêtement de la platine par raclage pour l'essentiel perpendiculairement à la direction d'extension principale de la zone dont le revêtement doit être enlevé de la platine.

2. Procédé selon la revendication 1,
**caractérisé en ce que**
l'enlèvement du revêtement a lieu pour préparer une zone de soudure, en particulier une zone de cordon de soudure.

3. Procédé selon la revendication 1 ou 2,
**caractérisé en ce que**
l'enlèvement du revêtement la platine a lieu sur les zones des bords.

4. Procédé selon une quelconque des revendications 1 à 3,
**caractérisé en ce que**
l'enlèvement du revêtement est effectué des deux côtés en une passe.

5. Procédé selon une quelconque des revendications 1 à 4,
**caractérisé en ce que**
l'enlèvement du revêtement d'une platine, qui est prévue pour la déformation à chaud, a lieu au moins partiellement.

6. Procédé selon une quelconque des revendications 1 à 5,
**caractérisé en ce qu'**
après l'enlèvement du revêtement au moins partiel de la platine, une coupe a lieu qui est effectuée en option dans la presse dans la même phase de travail.

7. Procédé selon une quelconque des revendications 1 à 6,
**caractérisé en ce que**
pour l'enlèvement du revêtement, les racloirs sont réglés de façon active ou guidés de façon forcée.

8. Procédé selon une quelconque des revendications 1 à 7,
**caractérisé en ce que**
les zones dont le revêtement doit être enlevé de la platine présentent une largeur de 0,2 mm à 5 mm, de préférence une largeur de 0,8 mm à 1,4 mm.

9. Dispositif pour l'enlèvement du revêtement au moins partiel d'une platine revêtue avec un procédé selon une quelconque des revendications 1 à 8, **caractérisé par** une presse avec un outil supérieur, un outil inférieur, un support de platine, une table de presse, au moins un racloir et des moyens pour déplacer le au moins un racloir pour l'essentiel perpendiculairement à la direction d'extension principale de la zone dont le revêtement doit être enlevé de la platine pour l'enlèvement du revêtement de cette zone.

10. Dispositif selon la revendication 9,
**caractérisé en ce que**
les moyens pour déplacer le au moins un racloir comprennent des guidages forcés pour guider un racloir ou une pluralité de racloirs.

11. Dispositif selon la revendication 10,
**caractérisé en ce qu'**
au moins un racloir dans l'outil inférieur et au moins un racloir dans l'outil supérieur ainsi que des guidages de racloir attribués à chaque racloir sont prévus, les guidages de racloir de l'outil supérieur pendant l'opération de fermeture de la presse sont en complémentarité de forme avec les guidages de racloir de l'outil inférieur et les guidages de racloir de l'outil inférieur sont guidés de façon forcée par des douilles de la presse comportant des chanfreins de poussée de sorte que par un mouvement de fermeture de la presse, les racloirs sont déplaçables dans l'outil supérieur et dans l'outil inférieur perpendiculairement au mouvement de fermeture.

12. Dispositif selon une quelconque des revendications 9 à 11,
**caractérisé en ce que**
la presse comporte en plus au moins un poinçon de découpe et/ou d'emboutissage qui découpe ou estampe la platine au moins partiellement sur les zones dont le revêtement doit être enlevé.

13. Dispositif selon une quelconque des revendications 9 à 12,
**caractérisé en ce que**
dans l'outil supérieur et/ou l'outil inférieur est prévu un poinçon monté au centre qui pousse la platine pendant l'enlèvement du revêtement sur le support de platine.

14. Dispositif selon une quelconque des revendications 9 à 13,
**caractérisé en ce que**
dans l'outil supérieur et/ou l'outil inférieur, les racloirs prévus et les guidages de racloirs correspondants forment le support de platine, des prolongements sur le poinçon et sur l'outil inférieur étant prévus qui passent par les guidages de racloirs et présentent un contact directement avec la platine.

15. Dispositif selon une quelconque des revendications 9 à 14,
**caractérisé en ce que**
chaque paire de racloirs montés de façon opposée est disposée sur chaque côté de la platine dont le revêtement doit être enlevé.
